# EUROPÄISCHE PATENTANMELDUNG

(11) **EP 2 107 765 A1**
(43) Veröffentlichungstag der Anmeldung: **07.10.2009**
(21) Anmeldenummer: 08153898.5
(22) Anmeldetag: 01.04.2008
(51) Int. Cl.: H04M 1/02

(54) **Stationsgerät für eine Hauskommunikationsanlage**

(71) Anmelder: GIRA Giersiepen GmbH & Co. KG, 42477 Radevormwald (DE)
(72) Erfinder: Mähringer, Claus, 45549 Sprockhövel (DE)
(74) Vertreter: Patentanwälte Dr. Solf & Zapf

(57) **Zusammenfassung**

Die vorliegende Erfindung betrifft ein Stationsgerät (1), insbesondere eine Wohnungsstation, für eine Hauskommunikationsanlage, mit einem Gerätegehäuse (2) und mit Audio-Komponenten mit einem Mikrofon (4) und einem Lautsprecher (6) für eine Audio-Kommunikation. Dabei ist das Mikrofon (4) über elektrische Anschlüsse (58) an einer Leiterplatte (36) angeschlossen und die Anschlüsse (58) sind von federnden Anlagekontaktelementen gebildet, die elektrisch leitend auf Kontaktflächen (60) der Leiterplatte (36) aufliegen. Ferner ist das Mikrofon (4) innerhalb des Gerätegehäuses (2) derart in einer Aufnahme (46) angeordnet, dass es akustisch vom rückwärtigen Schall des Lautsprechers (6) weitgehend entkoppelt ist.

## Beschreibung

Die vorliegende Erfindung betrifft ein Stationsgerät, und zwar insbesondere eine Wohnungsstation, für eine Hauskommunikationsanlage, mit einem Gerätegehäuse, mit Audio-Komponenten mit einem Mikrofon und einem Lautsprecher für eine Audio-Kommunikation nach einem Aufbau einer Kommunikationsverbindung mit einem anderen Stationsgerät der Hauskommunikationsanlage sowie vorzugsweise mit Video-Komponenten mit einem Display zur Darstellung eines Videobildes.

Die EP 1 843 590 A1 beschreibt eine Hauskommunikationsanlage mit mindestens einem Stationsgerät der beschriebenen Art. Konkret handelt es sich um eine Video-Wohnungsstation. Eine mit der Wohnungsstation über einen Zweidraht-Bus verbundene oder nach einem Rufsignal verbindbare, im Außenbereich einer Haus-Eingangstür angeordnete Türstation weist eine Videokamera auf, wobei das Display der Wohnungsstation zur Darstellung eines Videobildes der Videokamera der Türstation anhand eines über den Bus zu übertragenden Videosignals vorgesehen ist. Bei bekannten Stationsgeräten werden üblicherweise die elektrischen Bestandteile, wie Mikrofon und Lautsprecher, über elektrische Anschlussleitungen an einer internen Schaltung angeschlossen, wobei die Leitungen bei der Gerätemontage verlötet oder über Steckverbindungen angeschlossen werden müssen, was zu einem entsprechend hohen Aufwand bei der Herstellung des Gerätes führt. Außerdem ist das bekannte Video-Stationsgerät im Vergleich zu einer reinen Audio-Station, die kein Video-Display, sondern nur Audio-Komponenten (insbesondere für eine Freisprechfunktion Mikrofon und Lautsprecher) aufweist, sehr groß ausgebildet, weil eine Gehäuse-Frontplatte einen ersten Flächenbereich für den Lautsprecher und zugehörige Schallöffnungen und dazu versetzt einen zweiten Flächenbereich mit dem Video-Display aufweist.

Der vorliegenden Erfindung liegt die Aufgabe zu Grunde, ein Stationsgerät der eingangs beschriebenen Art zu schaffen, welches auf einfache und wirtschaftliche Weise herstellbar ist und insbesondere auch eine besonders kompakte Bauweise aufweist.

Erfindungsgemäß wird dies durch die Merkmale des unabhängigen Anspruchs 1 erreicht. Vorteilhafte Ausgestaltungsmerkmale der Erfindung sind Gegenstand der weiteren Ansprüche.

Demnach ist erfindungsgemäß das Mikrofon über elektrische Anschlüsse an einer Leiterplatte angeschlossen, wobei die Anschlüsse von federnden Anlagekontaktelementen gebildet sind, die elektrisch leitend auf Kontaktflächen der Leiterplatte aufliegen. In besonders vorteilhafter Ausgestaltung bestehen die Kontaktflächen der Leiterplatte aus einer inneren, insbesondere kreisförmigen Kontaktfläche und einer diese vorzugsweise kreisringförmig und konzentrisch umschließenden, äußeren Kontaktfläche. Die Anschlüsse des Mikrofons sind als Anlagekontaktelemente derart ausgebildet, dass sie unabhängig von der Drehausrichtung des Mikrofons die Kontaktflächen diskret, d. h. separat voneinander, kontaktieren. Aus dieser vorteilhaften Ausgestaltung resultiert eine besonders einfache Montage bei der Herstellung des erfindungsgemäßen Stationsgerätes. Das kleine, kapselartige Mikrofon braucht nur in eine Aufnahme eines Trägerteils eingesetzt zu werden, und das Trägerteil wird dann mit der zugehörigen Leiterplatte in einer zur Ebene der Leiterplatte senkrechten Richtung zusammengefügt. Die Anschlusskontaktierung des Mikrofons erfolgt somit allein durch Zusammenfügen der Bestandteile, indem die Leiterplatte mit dem das Mikrofon aufnehmenden Trägerteil mechanisch verbunden wird. Durch die bevorzugte Ausgestaltung der Kontaktflächen und eine entsprechend angepasste Ausgestaltung der Anlagekontakt-Anschlüsse des Mikrofons ist der Anschluss vorteilhafterweise unabhängig von der Drehausrichtung des Mikrofons innerhalb der Aufnahme des Trägerteils. Dies führt zu einer sehr einfachen und schnellen Montage, zumal sich auch Anschlussleitungen für das Mikrofon und Leitungsanschlüsse erübrigen.

In einer besonderen Ausgestaltung ist - zusätzlich oder aber alternativ zum Gegenstand des Anspruchs 1 - vorgesehen, dass das Mikrofon innerhalb des Gerätes derart angeordnet ist, dass es akustisch vom Schall des Lautsprechers weitgehend entkoppelt ist. Dies wird im Folgenden noch genauer erläutert werden.

In weiterer bevorzugter Ausgestaltung ist der Lautsprecher der Audio-Komponenten innerhalb des Gehäuses in einem zu einer vorderen Geräte-Sichtseite hin von dem Display überdeckten Bereich angeordnet, wobei dem Lautsprecher eine Schallkammer mit mindestens einer seitlichen Gehäuse-Schallöffnung zugeordnet ist. Dies bedeutet, dass der Lautsprecher praktisch hinter dem Video-Display untergebracht ist, so dass im Flächenbereich einer Gehäusefront auch ein Bereich mit Schallöffnungen entfällt. Dadurch wird eine deutliche Reduzierung der Baugröße hinsichtlich der Flächengröße der Gehäusefront erreicht. Über die dem Lautsprecher innerhalb des Gehäuses vorgeordnete Schallkammer und die seitliche, d. h. im Bereich einer GehäuseSeitenwand angeordnete Schallöffnung wird dennoch eine gute Schallführung erreicht. Vorzugsweise sind aber zwei Schallöffnungen in gegenüberliegenden Seitenwandungen vorgesehen, wobei jede Schallöffnung über einen inneren Schallkanal mit der Schallkammer verbunden ist. Diese Ausgestaltung gewährleistet eine effektive Leitung des Schalls aus dem Gehäuse nach außen.

In einer besonderen Ausgestaltung der Erfindung ist weiterhin vorgesehen, dass dem Lautsprecher auf seiner von der Schallkammer abgewandten Seite ein akustisches Rückvolumen zugeordnet ist, wobei dieses Rückvolumen zur Vermeidung eines akustischen Kurzschlusses von der Schall kammer akustisch getrennt (akustisch abgedichtet bzw. isoliert/entkoppelt) ist. Hierdurch ist trotz der sehr kompakten Ausgestaltung und der Unterbringung des Lautsprechers hinter dem Display eine sehr gute akustische Qualität der Audio-Übertragung mit hoher Effizienz der Schallemission des Lautsprechers gewährleistet.

Anhand eines in der Zeichnung veranschaulichten, bevorzugten Ausführungsbeispiels sollen die Erfindung und vorteilhafte Ausgestaltungen im Folgenden genauer erläutert werden. Es zeigen:
- Fig.1 1: eine Perspektivansicht eines erfindungsgemäßen Stationsgerätes in einer bevorzugten Ausführung als Video-Wohnungsstation zur Aufputz-Montage (AP-Installation),
- Fig.2: eine perspektivische Explosionsdarstellung der wesentlichen Bestandteile des Gerätes gemäß Fig. 1,
- Fig. 3: eine zweite Explosionsdarstellung ähnlich Fig. 2, aber mit teilmontierten Komponenten und aus anderer Blickrichtung,
- Fig. 4: eine weitere Perspektivansicht in einem weitergehend teilmontierten Zustand bestimmter Bestandteile und
- Fig.5: eine perspektivische Detail-Explosionsdarstellung im Bereich eines Mikrofons.

In den verschiedenen Figuren der Zeichnung sind gleiche Teile stets mit den gleichen Bezugszeichen versehen.

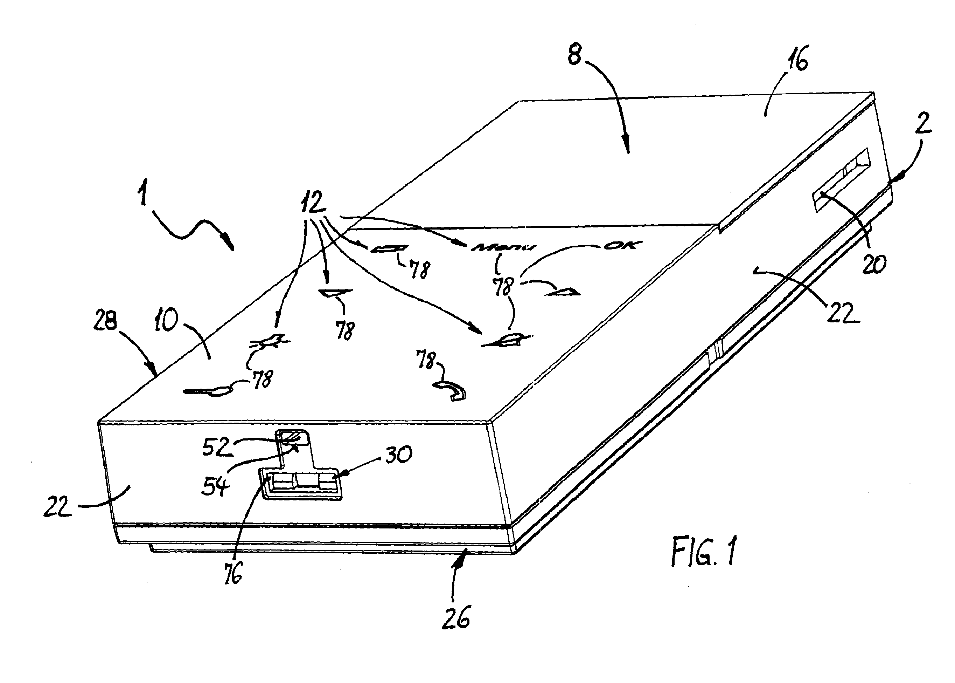

Ein erfindungsgemäßes Stationsgerät 1 (s. den Zusammenbau in Fig. 1) ist Bestandteil einer Hauskommunikationsanlage. Solche Anlagen werden in Gebäuden aus mindestens einer Türstation (im Außenbereich neben einer Haustür) und einer beliebigen Anzahl von Wohnungsstationen installiert, indem alle Stationen bevorzugt über einen gemeinsamen Zweidraht-Bus miteinander verbunden werden. Der Bus ist zur Übertragung von digitalen Steuersignalen und Kommunikationssignalen, und zwar Audio- und Videosignalen, ausgelegt und überträgt bevorzugt zusätzlich auch die Versorgungsspannung von einem zentralen Netzteil an die einzelnen Stationen.

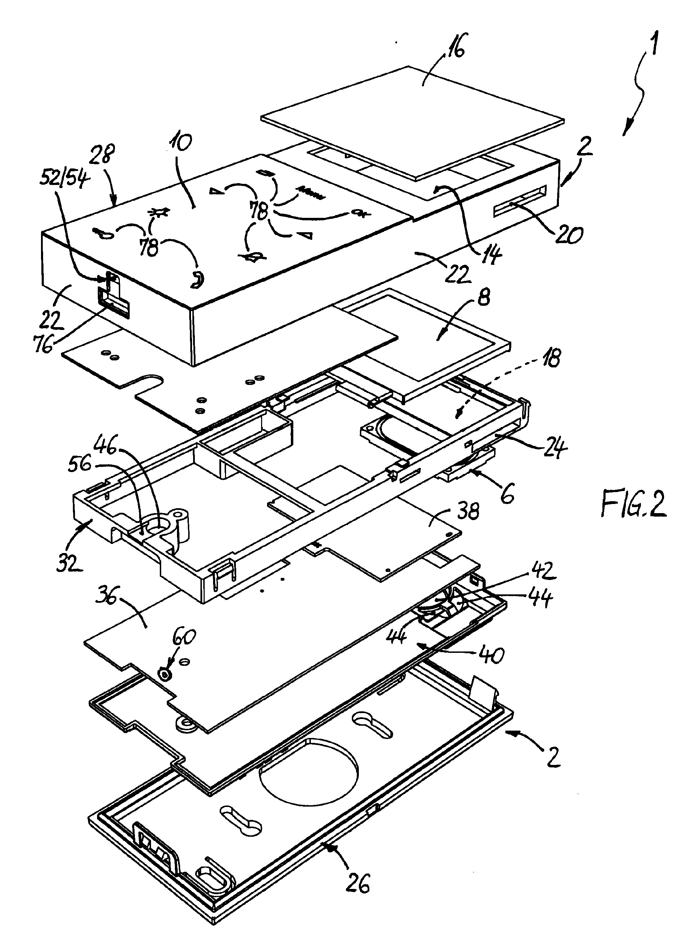

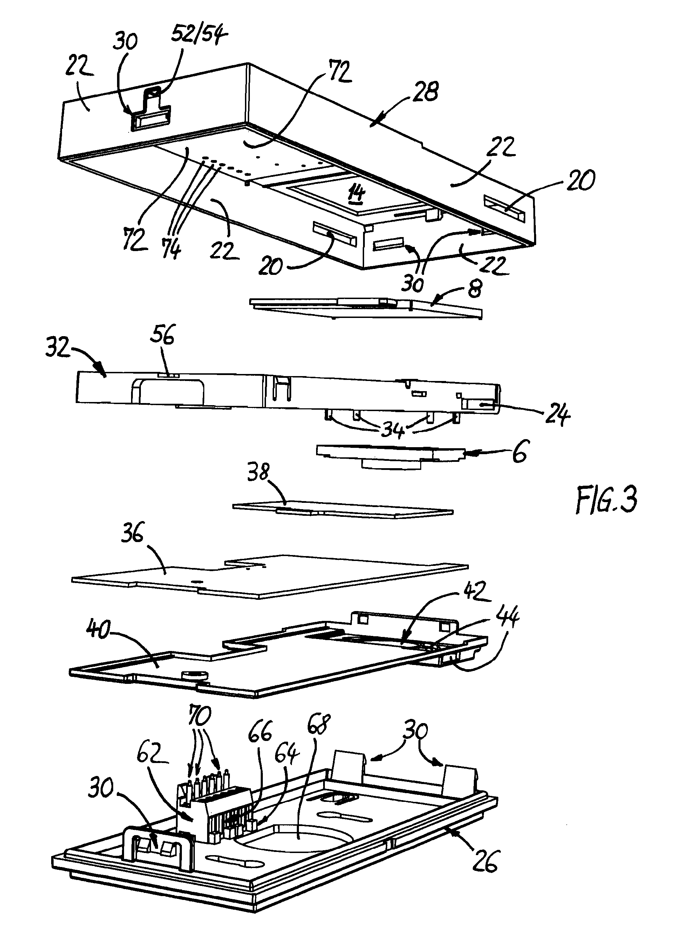

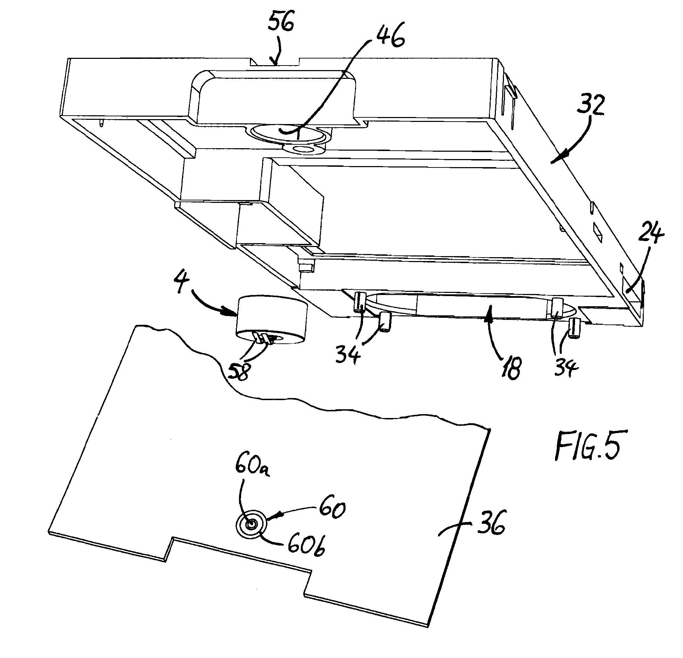

Das erfindungsgemäße Stationsgerät 1 ist insbesondere als Wohnungsstation konzipiert, die im Innenbereich einer Wohnung anzuordnen ist. Das Stationsgerät 1 weist ein Gerätegehäuse 2 sowie Audio-Komponenten mit einem Mikrofon 4 (s. Fig. 5) und einem Lautsprecher 6 (Fig. 2 und 3) auf. Bevorzugt weist das Stationsgerät 1 zudem Video-Komponenten mit einem Display 8 zur Darstellung eines Videobildes und/oder eines Benutzermenüs auf. Außerdem sind im Bereich einer Vorderwandung 10 des Gerätegehäuses 2 Bedien- und Anzeigeelemente 12 vorgesehen.

Die Audio-Komponenten mit dem Mikrofon 4 und dem Lautsprecher 6 sind zur Audio-Kommunikation zwischen den Stationen vorgesehen, insbesondere zwischen der Türstation und jeweils mindestens einer Wohnungsstation. Vorzugsweise sind auch Internverbindungen zwischen jeweils mindestens zwei Wohnungsstationen möglich. Zum Aufbau einer Audio-Verbindung wird zunächst an einer Station, insbesondere der Türstation, über eine Ruftaste ein Rufsignal für eine bestimmte andere Station erzeugt. Die Anlage ist zuvor bei Inbetriebnahme hinsichtlich der Zuordnung zwischen Ruftasten und Stationen programmiert worden, so dass in den Stationen alle über den Bus übertragenen Rufsignale überwacht werden. Die auf die jeweilige Ruftaste programmierte Station erkennt das ihr zugeordnete Signal und erzeugt ein akustisches und/oder optisches Rufsignal. Der Benutzer kann dann durch Betätigen einer Annahmetaste den Ruf annehmen, wodurch eine Audio-Verbindung mit der rufenden Station aufgebaut wird. Das Video-Display 8 des Stationsgerätes 1 dient zur Darstellung eines Videobildes, welches von einer Videokamera der Türstation erzeugt und in Form eines vorzugsweise außerhalb des hörbaren Frequenzbereiches modulierten Videosignals über den Bus übertragen wird.

Wie sich weiterhin aus Fig. 2 und 3 ergibt, ist das Display 8 bevorzugt von einem flachen TFT- oder LCD-Monitor gebildet. Dabei wird das Display 8 unmittelbar unterhalb der Vorderwandung 10 des Gerätegehäuses 2 im Bereich einer Gehäuseöffnung 14 untergebracht. Die Gehäuseöffnung 14 mit dem Display 8 wird dann bevorzugt von einer äußeren transparenten Abdeckung 16 überdeckt.

In bevorzugter Ausgestaltung ist vorgesehen, dass der Lautsprecher 6 innerhalb des Gehäuses 2 in einem zur vorderen Geräte-Sichtseite hin von dem Display 8 überdeckten Bereich, d. h. "unterhalb" des Displays 8, angeordnet ist. Hierbei ist dem Lautsprecher 6 eine Schallkammer 18 (s. hierzu insbesondere Fig. 2 und 5) mit mindestens einer seitlichen Gehäuse-Schallöffnung 20 zugeordnet. In bevorzugter Ausgestaltung weist das Gehäuse 2 im Bereich von zwei gegenüberliegenden Seitenwandungen 22 jeweils eine von zwei Schallöffnungen 20 auf, wobei jede Schallöffnung 20 mit der Schallkammer 18 über einen Schallkanal 24 verbunden ist. Die Schallkammer 18 und/oder der bzw. jeder Schallkanal 24 kann vorzugsweise nicht dargestellte Formelemente zur Beeinflussung / Führung des Schalls enthalten.

In einer besonderen Ausgestaltung ist dem Lautsprecher 6 auf seiner von der Schallkammer 18 abgewandten Seite ein akustisches Rückvolumen zugeordnet, wobei dieses Rückvolumen zur Vermeidung eines akustischen Kurzschlusses von der Schallkammer 18 akustisch getrennt ist. Dies wird im Folgenden noch genauer erläutert werden.

In der dargestellten, bevorzugten Ausführungsform ist das Gerätegehäuse 2 zur Montage auf einer Wandfläche konzipiert (so genannte AP-Montage bzw. Aufputz-Montage). Dazu besteht das Gerätegehäuse 2 aus einem Montage-Basisteil 26 und einem Gehäuse-Vorderteil 28. Das Vorderteil 28 ist flach haubenartig ausgebildet und besteht aus der rechteckigen Vorderwandung 10 und vier dazu senkrechten Seitenwandungen 22. Das Basisteil 26 ist als Grundplatte über geeignete Befestigungsmittel an einer Wandfläche befestigbar. Das Vorderteil 28 ist dann über Rastmittel 30 an dem plattenartigen Basisteil 26 befestigbar (aufrastbar). Wie dargestellt kann beispielsweise das Basisteil 26 als Rastmittel federnde Rastelemente aufweisen, die in zugehörige Rastöffnungen des Vorderteils 28 eingreifen.

Wie sich aus den Explosionsdarstellungen in Fig. 2 bis 5 ergibt, nimmt das Vorderteil 28 ein rahmenartiges Trägerteil 32 auf. Dieses Trägerteil 32 trägt wesentliche Funktionsteile des Stationsgerätes 1 und insbesondere auch den Lautsprecher 6. Das Trägerteil 32 weist zudem auch die Schallkammer 18 mit seitlichen Schallkanälen 24 auf, wobei die Schallkanäle 24 in jeweils eine der Schallöffnungen 20 des Vorderteils 28 des Gehäuses 2 übergehen, wenn das Trägerteil 32 in das Vorderteil 28 eingesetzt ist. Die Schallkammer 18 ist am besten in Fig. 5 zu erkennen. In diesem Bereich weist das Trägerteil 32 Haltelemente 34 für den Lautsprecher 6 auf. Der Lautsprecher 6 wird auf dieser Seite so an dem Trägerteil 32 befestigt, dass er mit seiner Membran direkt in die Schallkammer 18 gerichtet ist. Über die Schallkanäle 24 und die Schallöffnungen 20 gelangt der Schall aus dem Stationsgerät 1 nach außen.

Das Trägerteil 32 trägt weiterhin eine Haupt-Leiterplatte 36 (Mainboard mit nicht im Einzelnen dargestellten elektronischen Bestandteilen) sowie vorzugsweise eine separate Grafikkarte 38 für das Display 8, wobei das Display 8 selbst ebenfalls von dem Trägerteil 32 gehalten wird. Im montierten Zustand liegt die Grafikkarte 38 direkt unterhalb des Displays 8 und kann direkt über Anlagekontakte kontaktiert sein. Die Grafikkarte 38 enthält eine nicht genauer dargestellte elektronische Ansteuereinrichtung für das Display 8.

Zwischen dem Basisteil 26 und dem Trägerteil 32 ist ein plattenartiges Abdeckteil 40 als "Platinenabdeckung" angeordnet. Dieses Abdeckteil 40 ist vorzugsweise im Bereich des Lautsprechers 6 zur Bildung des akustischen Rückvolumens ausgestaltet. Dazu weist das Abdeckteil 40 einen Aufnahmeraum 42 für den rückwärtigen Bereich des Lautsprechers 6 auf. Hierzu wird insbesondere auf Fig. 2 bis 4 verwiesen. Dieser Aufnahmeraum 42 ist von der Schallkammer 18 akustisch entkoppelt. Bei der dargestellten Ausführungsform weist das Abdeckteil 40 im Bereich des Lautsprecher-Aufnahmeraums 42 mindestens eine akustisch wirksame Öffnung 44 auf, so dass das akustische Rückvolumen hauptsächlich im Bereich zwischen dem Abdeckteil 40 und dem Basisteil 26 gebildet ist.

Bevorzugt ist es in einer nicht dargestellten Ausführung ebenfalls möglich, das Abdeckteil 40 im Bereich des Aufnahmeraums 42 öffnungsfrei derart auszubilden, dass das akustische Rückvolumen dann hauptsächlich im Bereich zwischen dem Abdeckteil 40, dem Trägerteil 32 und dem Vorderteil 28, d. h. folglich in dem die Leiterplatten aufnehmenden Bereich gebildet ist. Der besondere Vorteil dieser Ausführung liegt darin, dass die Dichtigkeit des Rückvolumens unabhängig von der Beschaffenheit des Basisteils 26 (Grundplatte) und dessen Halterung auf einer Wand ist.

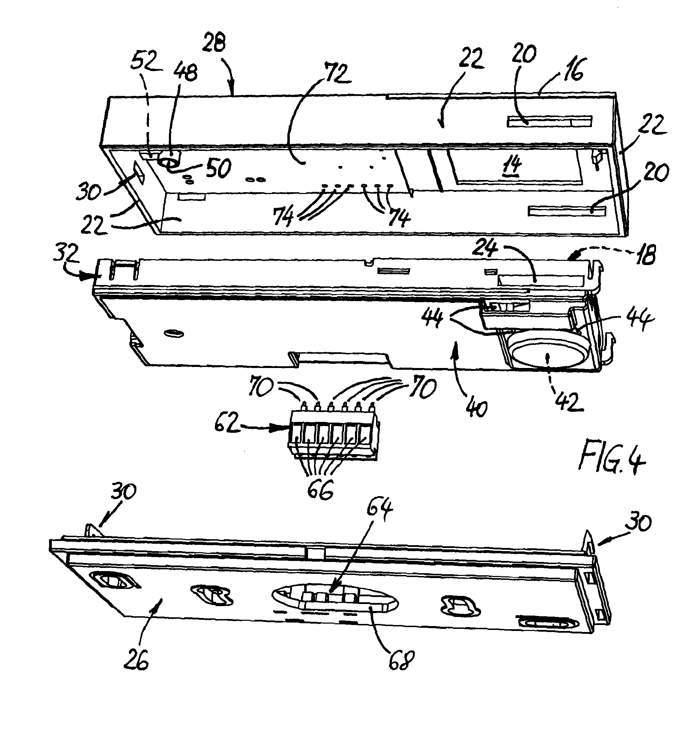

In einer besonderen Ausführung ist vorgesehen, dass das Mikrofon 4 innerhalb des Gerätegehäuses 2 derart in einer Aufnahme 46 angeordnet ist, dass es akustisch vom Schall des Lautsprechers 6, und zwar insbesondere von dessen rückwärtigem Schall im Bereich des Rückvolumens, weitgehend entkoppelt ist. Das nur in Fig. 5 dargestellte Mikrofon 4 ist als kleine zylindrische Kapsel ausgebildet. Die Aufnahme 46 ist insbesondere von einer zur Aufnahme und Halterung des Mikrofons 4 ausgelegten Öffnung des Trägerteils 32 gebildet. Gemäß Fig. 4 weist das Gehäuse-Vorderteil 28 auf der Innenseite der Vorderwandung 10 einen Ringkragen 48 auf. Im montierten, in das Vorderteil 28 eingesetzten und vorzugsweise verrasteten Zustand des Trägerteils 32 greift der Ringkragen 28 umfangsgemäß dichtend in die das Mikrofon 4 haltende Öffnung 46 des Trägerteils 32 ein. Somit vergrößert praktisch der Ringkragen 48 die Aufnahme 46 zur Bildung einer Schallkammer 50. Diese Schallkammer 50 geht in einen Schallkanal 52 über, der über eine Gehäuse-Schallöffnung 54 nach außen mündet. Dabei ist der Schallkanal 52 vorzugsweise durch eine einstückig angeformte Wandung innerhalb des Vorderteils 28 gebildet. Die Schallöffnung 54 ist insbesondere in der Seitenwandung 22 gebildet, die bei bestimmungsgemäßer Montage vertikal nach unten weist. Wie sich noch aus Fig. 2 und 5 ergibt, weist das Trägerteil 32 ausgehend von der Aufnahme 46 eine nutartige Ausnehmung 56 für den Schallkanal 52 des Gehäuse-Vorderteils 28 auf.

Das Mikrofon 4 ist über elektrische Anschlüsse 58 an einer Leiterplatte, insbesondere an der Haupt-Leiterplatte 36 angeschlossen, wobei die Anschlüsse 58 erfindungsgemäß von federnden Anlagekontaktelementen gebildet sind, die elektrisch leitend auf Kontaktflächen 60 der Leiterplatte 36 zur Auflage kommen. Die Kontaktierung des Mikrofons 4 erfolgt somit allein durch Zusammenfügen der Bestandteile, indem die Leiterplatte 36 mit dem das Mikrofon 4 aufnehmenden Trägerteil 32 verbunden wird. Hierbei ist es weiterhin vorteilhaft, wenn die Kontaktflächen 60 zueinander konzentrisch ausgebildet sind. Dies bedeutet, dass eine innere Kontaktfläche 60a etwa kreisförmig und eine äußere Kontaktfläche 60b dazu konzentrisch kreisringförmig ausgebildet sind. Hierzu wird insbesondere auf Fig. 5 verwiesen. Die Anlagekontakt-Anschlüsse 58 des Mikrofons 4 sind hierbei derart ausgebildet und angeordnet, dass sie die Kontaktflächen 60 diskret kontaktieren, d. h. der eine Anschluss kontaktiert die innere Kontaktfläche 60a und der andere Anschluss die äußere Kontaktfläche 60b, und zwar vorteilhafterweise unabhängig von der Drehausrichtung des Mikrofons 4 innerhalb der Aufnahme 36. Dies führt zu einer sehr einfachen Montage, zumal sich auch Anschlussleitungen für das Mikrofon erübrigen.

Es ist weiterhin vorteilhaft, wenn das Mikrofon 4 eine äußere Kapselung aus einem gummielastischen Material aufweist. Hierdurch ist einerseits eine gute Halterung innerhalb der Aufnahme 46 gewährleistet und andererseits auch eine gute akustische Abdichtung, indem der Ringkragen 48 des Gehäuse-Vorderteils 28 dicht zur Anlage auf der gummielastischen Kapselung des Mikrofons 4 gelangt.

In Fig. 3 und 4 ist eine weitere vorteilhafte Ausgestaltung veranschaulicht. An bzw. auf dem Basisteil 26 ist ein elektrisches Anschlussteil 62 gehaltert, und zwar vorzugsweise über Rastmittel 64. Das Anschlussteil 62 weist einerseits elektrische Anschlussklemmen 66 für nicht dargestellte elektrische Leitungen auf. Es kann sich bevorzugt um Schraubklemmen, alternativ aber auch um Steckklemmen handeln. Auf Grund der AP-Montage weist das Basisteil 28 mindestens eine Durchführöffnung 68 für aus einer Gebäudewand geführte Leitungen auf. Das Anschlussteil 62 weist mindestens zwei Anschlussklemmen 66 für den Zweidraht-Bus auf. Vorzugsweise sind zwei weitere Anschlussklemmen 66 für einen nicht dargestellten, außerhalb einer Wohnung insbesondere vor einer Wohnungs-Eingangstür angeordneten Etagen-Ruftaster vorgesehen. Schließlich können zwei weitere Anschlussklemmen 66 für eine Zusatz-Spannungsversorgung vorhanden sein. Somit sind in bevorzugter Ausgestaltung sechs Anschlussklemmen 66 vorhanden. Die Anschlussklemmen 66 des Anschlussteils 62 sind vorzugsweise über federnde Anlagekontaktelemente 70 mit einer in dem Vorderteil 28 des Gerätegehäuses 2 angeordneten Leiterplatte 72 elektrisch verbunden. Bei dieser Leiterplatte 72 handelt es sich bevorzugt um ein so genanntes "Keyboard"; diese Leiterplatte 72 trägt auch Schaltelemente, und zwar insbesondere kapazitive Schaltelemente sowie Leuchtelemente im Bereich der Bedien-und Anzeigelemente 12. Die Leiterplatte 72 ist bevorzugt in das Gehäuse-Vorderteil 28 eingeklebt. Alternativ zu einem Verkleben kann die Leiterplatte 72 auch mechanisch an das Vorderteil 28 gedrückt werden. Die Anlagekontaktelemente 70 sind als teleskopartig längenvariable Federstifte ausgebildet, die im Wesentlichen senkrecht zu der Leiterplatte 72 ausgerichtet sind. Wie dargestellt sind bevorzugt die Anlagekontaktelemente 70 Bestandteile des Anschlussteils 62, während die Leiterplatte 72 zugehörige Kontaktflächen 74 zum elektrischen Anlagekontakt der Anlagekontaktelemente 70 aufweist. Grundsätzlich kann dies aber auch umgekehrt sein. Durch diese vorteilhafte Ausgestaltung werden über das Anschlussteil 62 die daran angeschlossenen Leitungen mit der Elektronik des Stationsgerätes 1 auf sehr einfache Weise dadurch verbunden, dass die Bestandteile nur zusammengefügt werden müssen, wobei die Verbindungen über die durch Federkraft auf den Kontaktflächen 74 aufliegenden Kontaktelemente 70 hergestellt werden. Somit handelt es sich vorteilhafterweise um leitungsfreie interne Verbindungen, d. h. es können interne Verbindungsleitungen und elektrische (Steck- oder Löt-) Verbindungen vorteilhafterweise entfallen. Die bevorzugte Verbindungsart ist auch noch aus einem zusätzlichen Grund vorteilhaft. Bei den verwendeten Rastmitteln 30 zwischen Basisteil 26 und Vorderteil 28 erfolgt ein Lösen des Vorderteils 28, indem die auf einer (unteren) Seite vorgesehenen Rastmittel 30 durch eine Gehäuseöffnung 76 hindurch gelöst bzw. entriegelt werden können. Dadurch kann das Vorderteil 28 dann mit dieser (unteren) Seite nach vorne verschwenkt werden, bis das Vorderteil 28 auch in seinem gegenüberliegenden (oberen) Bereich von den Rastmitteln 30 freikommt. Die erfindungsgemäßen Anlagekontaktelemente 70 lassen diese relative Schwenkbewegung beim Öffnen und auch beim Schließen des Gehäuses ohne Probleme zu.

Im Bereich der in der Zeichnung nicht erkennbaren kapazitiven Schaltelemente der Leiterplatte 72 weist die Gehäuse-Vorderwandung 10 in ihren jeweils eines der Schaltelemente überdeckenden Bereichen lichtdurchlässige Leuchtsymbole 78 auf. Zur manuellen Betätigung der Schaltelemente braucht ein Bediener lediglich mit seinem Finger die Vorderwandung 10 im Bereich eines der Leuchtsymbole 78 leicht zu berühren. Im Bereich der Leuchtsymbole 78 weist die Leiterplatte 72 zusätzlich zu den Schaltelementen zugehörige Leuchtmittel auf. Vorzugsweise sind als Leuchtmittel jedem Leuchtsymbol 78 zwei benachbarte Leuchtdioden zugeordnet (in der Zeichnung nicht dargestellt), wodurch eine verbesserte Flächenausleuchtung der Leuchtsymbole 78 erreicht wird.

In einer weiteren besonderen Ausgestaltung weist das Stationsgerät 1 benutzerseitig aktivierbare oder deaktivierbare Mittel für eine automatische Annahme eines von einem anderen Stationsgerät innerhalb der Hauskommunikationsanlage eingehenden Rufes durch automatisches Aufbauen einer Audio-Verbindung als Reaktion auf den eingehenden Ruf auf. Dies bedeutet, dass in einem aktivierten Zustand der Mittel zur automatischen Rufannahme bei einem eingehenden Ruf die Audio-Verbindung selbsttätig hergestellt wird, ohne dass zum Verbindungsaufbau ein Bedienelement betätigt werden müsste. In einem Auslieferzustand des Stationsgerätes 1 ist diese Funktion für den Benutzer nicht zugänglich, indem ein entsprechender Menüpunkt in einem auf dem Display dargestellten Benutzermenü nicht erscheint. Eine Freischaltung der Funktion erfolgt durch einen Installateur bei der Inbetriebnahme der Hauskommunikationsanlage auf Kundenwunsch. Erst nach dieser Freischaltung erscheint im Benutzermenü der Punkt "Automatische Rufannahme". Diese Funktion kann dann von dem Benutzer im Menü entsprechend aktiviert oder deaktiviert werden. In Kombination mit dieser Funktion ist es vorteilhaft, den Tonruf abschalten zu können. Auch dies erfolgt über das Benutzermenü. Über die Anzeigeelemente 12 kann der jeweilige Betriebszustand optisch signalisiert werden, beispielsweise über das Leuchtsymbol 78 in Form einer durchgestrichenen Glocke. Wenn dieses Leuchtsymbol dauerleuchtet, ist die Rufabschaltung aktiviert (Tonruf aus), und die automatische Rufannahme ist deaktiviert. Bei dauerhaft ausgeschaltetem Leuchtsymbol sind beide Funktionen deaktiviert, d. h. keine automatische Rufannahme und normaler Tonruf. Durch ein Blinken des LED-Signals wird signalisiert, dass die automatische Rufannahme aktiv ist. Um auch eine Aussage über den Zustand der Rufabschaltung zu erhalten, kann vorgesehen sein, durch kurze Betätigung des zugehörigen Schaltelementes von dem blinkenden Zustand für eine bestimmte Zeit von beispielsweise zwei Sekunden in einen anderen Anzeigemodus umzuschalten. Wenn dann für diese kurze Zeit das Signal leuchtet, ist die Rufabschaltung aktiviert, und wenn das Signal nicht leuchtet, ist die Rufabschaltung nicht aktiv. Bei aktivierter automatischer Rufannahme wird nach vollständigem Ablauf des Tonrufs, d. h. bevorzugt mit einer Verzögerung von etwa zwei Sekunden, die Audioverbindung selbsttätig hergestellt.

Es sei noch bemerkt, dass die automatische Rufannahme vorzugsweise auf Internrufe beschränkt ist, d. h. auf Verbindungen zwischen Wohnungsstationen.

Die automatische Rufannahme gestattet im Rahmen einer Hauskommunikationsanlage einen Aufbau einer Sprechverbindung ohne Bedienung an der gerufenen Station, z. B. für Büros, Kinderzimmer (Babyfon-Funktion), Arztpraxen und dergleichen.

Wie oben bereits erwähnt wurde, kann optional über das Anschlussteil 62 eine Zusatz-Spannungsversorgung von insbesondere 24 Volt an das Gerät 1 angeschlossen werden. In diesem Fall steht unabhängig von der Versorgung über den Zweidraht-Bus stets genügend Leistung zur Verfügung.

In vorteilhafter Ausgestaltung kann dabei das Stationsgerät 1 Mittel für eine automatische (dynamische) Erkennung der angeschlossenen Zusatzversorgung aufweisen. Wenn diese Erkennungsmittel das Vorhandensein der Zusatz-Versorgungsspannung feststellen, können automatisch bestimmte Zusatzfunktionen der Station 1 freigegeben werden. Dies betrifft insbesondere die Aktivierung des Displays 8 unabhängig von dem Betriebszustand der anderen Stationen innerhalb der Anlage. Bei Versorgung der Stationen allein über den Bus wäre die Leistung begrenzt, so dass beispielsweise nicht alle Displays aller Stationen gleichzeitig in Betrieb sein könnten. Bei angeschlossener und automatisch erkannter Zusatzversorgung können auch beliebige Internrufe und sonstige Schaltfunktionen (beispielsweise Steuerung von Treppenhauslicht, Türöffner und dergleichen) freigegeben und dann über das Display menügeführt gesteuert werden. Außerdem können optional bestimmte Betriebszustände - zusätzlich zu den Anzeigeelementen 12 - auch auf dem Display insbesondere verbal angezeigt werden.

Die Erfindung ist nicht auf die dargestellten und beschriebenen Ausführungsbeispiele beschränkt, sondern umfasst auch alle im Sinne der Erfindung gleichwirkenden Ausführungen. Insbesondere ist die Erfindung nicht nur für Bus-Systeme, sondern auch für andere Verdrahtungssysteme geeignet, z. B. Mehrdrahtsysteme, wie so genannte 1+n-Anlagen, oder Ethernet-Systeme (TCP/IP) oder auch Funk-Anlagen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Stationsgerät (1), insbesondere Wohnungsstation, für eine Hauskommunikationsanlage, mit einem Gerätegehäuse (2) und mit Audio-Komponenten mit einem Mikrofon (4) und einem Lautsprecher (6) für eine Audio-Kommunikation,
**dadurch gekennzeichnet, dass** das Mikrofon (4) über elektrische Anschlüsse (58) an einer Leiterplatte (36) angeschlossen ist und die Anschlüsse (58) von federnden Anlagekontaktelementen gebildet sind, die elektrisch leitend auf Kontaktflächen (60) der Leiterplatte (36) aufliegen.

2. Stationsgerät nach Anspruch 1,
**dadurch gekennzeichnet, dass** die Kontaktflächen (60) der Leiterplatte (36) aus einer inneren, insbesondere kreisförmigen Kontaktfläche (60a) und einer diese vorzugsweise kreisringförmig und konzentrisch umschließenden, äußeren Kontaktfläche (60b) bestehen, wobei die Anschlüsse (58) des Mikrofons (4) derart ausgebildet sind, dass sie unabhängig von der Drehausrichtung des Mikrofons (4) die Kontaktflächen (60) diskret kontaktieren.

3. Stationsgerät nach Anspruch 1 oder 2 oder nach dem Oberbegriff des Anspruchs 1,
**dadurch gekennzeichnet, dass** das Mikrofon (4) innerhalb des Gerätegehäuses (2) derart in einer Aufnahme (46) angeordnet ist, dass es akustisch vom rückwärtigen Schall des Lautsprechers (6) weitgehend entkoppelt ist.

4. Stationsgerät nach Anspruch 3,
**dadurch gekennzeichnet, dass** dem in der Aufnahme (46) sitzenden Mikrofon (4) eine Schallkammer (50) mit einem zu einer Gehäuse-Schallöffnung (54) führenden Schallkanal (52) vorgeordnet ist.

5. Stationsgerät nach einem der Ansprüche 1 bis 4,
**dadurch gekennzeichnet, dass** zusätzlich zu den Audio-Komponenten auch Video-Komponenten mit einem Display (8) zur Darstellung eines Videobildes und/oder eines Benutzermenüs vorgesehen sind, wobei der Lautsprecher (6) innerhalb des Gehäuses (2) in einem zu einer vorderen Geräte-Sichtseite hin von dem Display (8) überdeckten Bereich angeordnet ist, wobei dem Lautsprecher (6) eine Schallkammer (18) mit mindestens einer seitlichen Gehäuse-Schallöffnung (20) zugeordnet ist.

6. Stationsgerät nach Anspruch 5,
**dadurch gekennzeichnet, dass** dem Lautsprecher (6) auf seiner von der Schallkammer (18) abgewandten Seite ein akustisches Rückvolumen zugeordnet ist, wobei das Rückvolumen zur Vermeidung eines akustischen Kurzschlusses von der Schallkammer (18) akustisch getrennt ist.

7. Stationsgerät nach einem der Ansprüche 1 bis 6,
**dadurch gekennzeichnet, dass** das Gerätegehäuse (2) zur Montage auf einer Wandfläche konzipiert ist und dazu aus einem Montage-Basisteil (26) und einem Gehäuse-Vorderteil (28) besteht, wobei vorzugsweise das Vorderteil (28) haubenartig aus einer Vorderwandung (10) und vier Seitenwandungen (22) besteht und über Rastmittel (30) an dem plattenartigen Basisteil (26) befestigt oder befestigbar ist.

8. Stationsgerät nach Anspruch 7,
**dadurch gekennzeichnet, dass** das Vorderteil (28) ein rahmenartiges, wesentliche Funktionsteile tragendes Trägerteil (32) aufnimmt, wobei das Trägerteil (32) die Aufnahme (46) für das Mikrofon (4) aufweist und insbesondere auch den Lautsprecher (6) trägt sowie die Schallkammer (18) mit vorzugsweise zwei seitlichen, in jeweils eine von zwei Gehäuse-Schallöffnungen (20) übergehenden Schallkanälen (24) aufweist.

9. Stationsgerät nach Anspruch 7 oder 8,
**dadurch gekennzeichnet, dass** zwischendemBasisteil(26) und dem Trägerteil (32) ein plattenartiges Abdeckteil (40) angeordnet ist, wobei das Abdeckteil (40) im Bereich des Lautsprechers (6) zur Bildung des akustischen Rückvolumens ausgestaltet ist.

10. Stationsgerät nach Anspruch 9,
**dadurch gekennzeichnet, dass** dasAbdeckteil(40)einen Aufnahmeraum (42) für den rückwärtigen Bereich des Lautsprechers (6) aufweist, wobei der Aufnahmeraum (42) von der Schallkammer (18) akustisch entkoppelt ist.

11. Stationsgerät nach Anspruch 10,
**dadurch gekennzeichnet, dass** das Abdeckteil (40) im Bereich des Aufnahmeraums (42) öffnungsfrei derart ausgebildet ist, dass das akustische Rückvolumen hauptsächlich im Bereich zwischen dem Abdeckteil (40), dem Trägerteil (32) und dem Vorderteil (28) gebildet ist.

12. Stationsgerät nach einem der Ansprüche 7 bis 11,
**dadurch gekennzeichnet, dass** an dem Basisteil (26) ein Anschlussteil (62) mit Anschlussklemmen (66) für elektrische Leitungen gehaltert ist, wobei das Anschlussteil (62) über federnde Anlagekontaktelemente (70) mit einer in dem Vorderteil (28) angeordneten Leiterplatte (72) elektrisch verbunden ist.

13. Stationsgerät nach Anspruch 12,
**dadurch gekennzeichnet, dass** die Anlagekontaktelemente (70) als Federstifte ausgebildet sind, die im Wesentlichen senkrecht zu der Leiterplatte (72) ausgerichtet sind, wobei vorzugsweise die Anlagekontaktelemente (70) Bestandteile des Anschlussteils (62) sind, während die Leiterplatte (72) Kontaktflächen (74) zum elektrischen Anlagekontakt der Anlagekontaktelemente (70) aufweist.

14. Stationsgerät nach einem der Ansprüche 1 bis 13,
**dadurch gekennzeichnet, dass** innerhalb des Gerätegehäuses (2) direkt unterhalb der Vorderwandung (10) des Gehäuse-Vorderteils (28) auf einer Leiterplatte (72) kapazitive Schaltelemente angeordnet sind, wobei die Vorderwandung (10) in ihren jeweils eines der Schaltelemente überdeckenden Bereichen lichtdurchlässige Leuchtsymbole (78) und die Leiterplatte (72) zugehörige Leuchtmittel aufweisen, wobei vorzugsweise als Leuchtmittel jedem Leuchtsymbol (78) zwei benachbarte Leuchtdioden zugeordnet sind.

15. Stationsgerät nach einem der Ansprüche 1 bis 14,
**gekennzeichnet durch** benutzerseitig aktivierbare oder deaktivierbare Mittel für eine automatische Annahme eines von einem anderen Stationsgerät innerhalb der Hauskommunikationsanlage eingehendes Rufes **durch** automatisches Aufbauen einer Audio-Verbindung als Reaktion auf den eingehenden Ruf.

16. Stationsgerät nach einem der Ansprüche 12 bis 15,
**dadurch gekennzeichnet, dass** dasAnschlussteil(62)zwei Anschlüsse (66) für eine Zweidraht-Busleitung, zwei weitere Anschlüsse (66) für einen externen Etagen-Ruftaster sowie vorzugsweise zwei zusätzliche Anschlüsse (66) für eine Zusatz-Spannungsversorgung aufweist, wobei insbesondere Mittel zur selbsttätigen Erkennung der Zusatz-Spannungsversorgung vorgesehen sind.
